# EUROPÄISCHE PATENTSCHRIFT

(11) **EP 3 685 124 B1**
(45) Veröffentlichungstag und Bekanntmachung des Hinweises auf die Patenterteilung: **30.03.2022**
(21) Anmeldenummer: 18765592.3
(22) Anmeldetag: 30.08.2018
(51) Int. Cl.: G01D 11/24, H01R 13/56, H01R 13/58

(54) **HALTER FÜR EINE SENSOREINHEIT**
HOLDER FOR A SENSOR UNIT
SUPPORT POUR UNE UNITÉ DE DÉTECTION

(30) Priorität: 19.09.2017 DE 102017216533
(43) Veröffentlichungstag der Anmeldung: 29.07.2020
(73) Patentinhaber: Robert Bosch GmbH, 70442 Stuttgart (DE)
(72) Erfinder: STEINBRINK, Ronald, 99820 Hoerselberg-Hainich (DE); SCHULZE, Steffen, 99817 Eisenach (DE); HEGAZI, Anwar, 99192 Frienstedt (DE)
(86) Internationale Anmeldenummer: PCT/EP2018/073329
(87) Internationale Veröffentlichungsnummer: WO 2019/057463

(56) Entgegenhaltungen:
- DE-A1- 10 222 204
- DE-A1-102004 011 100
- DE-A1-102005 043 413
- DE-A1-102008 018 199
- DE-A1-102009 046 439
- DE-A1-102014 202 192

## Beschreibung

### Stand der Technik

Die Erfindung geht aus von einem Halter für eine Sensoreinheit nach der Gattung des unabhängigen Patentanspruchs 1. Gegenstand der vorliegenden Erfindung sind auch eine Sensoreinheit für ein Fahrzeug mit einem solchen Halter und ein Montageverfahren für eine solche Sensoreinheit.

Der Aufbau von bekannten direkt gesteckten als Drehzahlfühler ausgeführten Sensoreinheiten erfolgt durch eine elektrische Anbindung eines Messwertgebers, welcher beispielsweise ein Sensorelement und eine als anwendungsspezifische integrierte Schaltung (ASIC) ausgeführte Sensorschaltung umfasst, an mindestens zwei Stromschienen. Hierbei ist eine interne elektrische Schnittstelle zum Messwertgeber an ersten Enden der mindestens zwei Stromschienen ausgebildet, und eine externe elektrische Schnittstelle ist an zweiten Enden der mindestens zwei Stromschienen ausgebildet. Die kundenspezifische Applikation an das Fahrzeug sowie die Isolation der elektrischen Komponenten wird in der Regel durch eine Umspritzung mit Thermoplast oder Duroplast realisiert. Die Fertigung eines Gegensteckers für die externe elektrische Schnittstelle mit Leitung und Komponenten zur Applikation am Fahrzeug erfolgt separat beim Kunden oder dessen Lieferanten. Für den Umspritzvorgang wird der Messwertgeber in der Regel durch einen integrierten Halter fixiert. Diese realisiert auch die Steckergeometrie. Die Abdichtung zwischen Halter und Umspritzung erfolgt über kleine Rippengeometrien bzw. Dichtrippen, welche durch die Temperatur beim Füllvorgang anschmelzen und so einen Form- und Stoffschluss sicherstellen. Die elektrische Anbindung zwischen den mindestens zwei Stromschienen und dem elektrischen Leiter erfolgt üblicherweise mit Hilfe eines Terminals durch Laserlöten, Krimpen oder Direktschweißen des Leiters auf die korrespondierende Stromschiene. Als nachteilig können bei dem bekannten Aufbau die hohen Zykluszeiten und komplizierten Werkzeuge angesehen werden, die sowohl Halter als auch Steckerkonturen abbilden müssen. Dadurch entstehen hohe Abkühlzeiten bei den Thermoplast-Spritzgussprozessen. Kompliziert wird der Prozess auch durch das komplexe Handling der Stromschienen, die hohe Varianz an Steckergeometrien und verschiedene Positionen eines Befestigungsmoduls, welche je nach Einbaulage der Sensoreinheit am Fahrzeug entstehen. Zudem erfordern die verschiedenen Applikationen und Werkzeugbedingungen wie Schwindungsunterschiede, verschiedene Anspritzpunkte, verschiedene Spritzgussmaschinen, Kühlkonzepte usw. teilweise kostenintensive Untersuchungen bzw. Zusatzmaßnahmen. Weiterhin erfordert die Thermoplastumspritzung des Messwertgebers in verschiedener Geometrien, je nach Kundenapplikation bzw. Einbauanforderungen der Sensoreinheit im Fahrzeug, bei jeder neuen Variante einen erheblichen Freigabeaufwand für Design und Prozess, um thermische und mechanische Spannungen beim Spritzprozess auf den Messwertgeber zu vermeiden.

Aus der DE 10 2014 202 192 A1 ist eine Sensoreinheit für ein Fahrzeug, mit einem Grundkörper bekannt, welcher eine Sensorschaltung mit mindestens einem Sensorkontakt trägt und an einem ersten Ende eine Sensorkontaktierung, welche über mindestens einen Sensorgegenkontakt elektrisch mit dem mindestens einen Sensorkontakt verbunden ist, und an einem zweiten Ende eine Kabelkontaktierung aufweist, welche über mindestens einen Kabelkontakt elektrisch mit einem Anschlusskabel verbunden ist.

Aus der DE 10 2008 018 199 A1 ist eine elektrische Baugruppe, bestehend aus einem Stanzgitter als elektrische Leiterbahnstruktur, elektrischen Bauelementen auf diesem Stanzgitter und einer Füllmasse aus nichtleitendem Material bekannt.

Aus der DE 102 22 204 A1 ist eine Halterung, insbesondere für eine Sensoranordnung bekannt, die mit einem Sensorelement und einer Auswerteelektronik zur Verarbeitung des am Sensorelement abnehmbaren elektrischen Signals und mit einem elektrisch kontaktierbaren Halteelement für das Sensorelement und die Auswerteelektronik versehen ist.

Aus der DE 10 2009 046 439 A1 ist eine Sensoreinheit mit einem ein Sensorelement und ein Halteelement zur Halterung des Sensorelements aufweisenden Sensorkern und einer den Sensorkern umgebenden Kunststoffummantelung bekannt.

Aus der DE 10 2004 011100 A1 sind ein Bewegungssensor, insbesondere ein Drehzahlsensor für die Raddrehung eines Kraftfahrzeuges, sowie ein Verfahren zur Herstellung eines Bewegungssensors bekannt, welcher eine über ein elektrisches Kabel anschließbare integrierte Schaltung mit einem Messwertgeber und einer elektronischen Schaltungsanordnung zur Aufbereitung der Messsignale aufweist.

Aus der DE 10 2005 043 413 A1 ist ein Grundmodul für einen Bewegungssensor, insbesondere Drehzahlgeber, Phasengeber oder Getriebesensor für Kraftfahrzeuge, bekannt. Das Grundmodul weist mehrere Stromschienen zur Kontaktierung einer integrierten Schaltung zur Sensierung einer Bewegung auf. Das Grundmodul umfasst zumindest ein Beschaltungsmittel, das an den Stromschienen angeordnet ist, wobei die Stromschienen und das Beschaltungsmittel zumindest teilweise von einer Ummantelung umgeben sind. Die im Wesentlichen zylindrische Ummantelung des Grundmoduls weist eine keilförmige, in axialer Richtung verlaufende Ausnehmung auf, sodass die Stromschienen jeweils an einem Ende von außen mit der integrierten Schaltung kontaktierbar sind. Am anderen Ende ragen die Stromschienen aus der Ummantelung des Grundmoduls heraus. An einem Kopfende des Grundmoduls ist eine radial orientierte Aussparung vorgesehen, die von einem im Wesentlichen U-förmigen Rand umgeben ist. Die Ausnehmung und die Aussparung dienen der Aufnahme der auf Trägerstreifen angebrachten integrierten Schaltung. Zudem ist eine weitere Stromschienenanordnung vorgesehen, die aus mehreren Stromschienen besteht, welche mit den über die Ummantelung hinausragenden Enden der Stromschienen des Grundmoduls kontaktiert sind. Das Grundmodul kann kundenspezifisch durch Auswahl der weiteren Stromschienenanordnung an die jeweiligen Anforderungen in Bezug auf Steckerdesign und Gehäusegeometrie angepasst werden.

In der DE 10 2005 012 709 A1 wird beispielsweise ein Magnetfeldsensor, insbesondere ein Drehzahl- und/oder Drehrichtungssensor für ein Fahrzeugrad oder für den Triebstrang eines Fahrzeugs offenbart. Der Magnetfeldsensor weist einen gattungsgemäßen Halter für ein Sensorelement und gegebenenfalls weitere Sensorbauteile auf. Der Halter ist als Kunststoffspritzteil ausgeführt und besitzt eine taschenartige Aussparung im Bereich seiner leseseitigen Stirnfläche, in welcher das Sensorelement bei der abschließenden Umspritzung mit Kunststoff zumindest in Spritzdruckrichtung abgestützt und somit gegen mechanische Beschädigung geschützt ist. Eine Anschlussanordnung für den beschriebenen Magnetfeldsensor weist ein Anschlusselement auf, welches in einem ersten Kontaktierungsbereich zwei Anschlussstücke aufweist, welche jeweils über eine Crimpverbindung elektrisch und mechanisch mit den abisolierten Enden eines Anschlusskabels verbunden sind. In einem zweiten Kontaktierungsbereich sind die Anschlussstücke elektrisch und mechanisch mit Anschlussleitungen eines Sensorelements verbindbar. Das Anschlusselement ist zumindest teilweise von einer Kunststoffumspritzung umhüllt, welche in einem Übergangsbereich zwischen dem ersten Kontaktierungsbereich und dem zweiten Kontaktierungsbereich eine fensterförmige Aussparung aufweist, welche während des Spritzvorgangs der Kunststoffumspritzung im Spritzgusswerkzeug abgedichtet ist. Diese Anschlussstücke sind zunächst zur Erleichterung der Positionierung des Anschlusselements vor dem Spritzvorgang einteilig und werden anschließend durch das Trennen der Verbindungsteile elektrisch gegeneinander isoliert.

In der DE 10 2006 029 980 A1 wird beispielsweise eine Sensoranordnung, insbesondere eine Sensoranordnung zur Sensierung von Drehzahl und/oder Drehrichtung für ein Fahrzeugrad oder für den Triebstrang eines Fahrzeugs offenbart. Die Sensoranordnung umfasst einen Halter, zumindest ein auf dem Halter angeordnetes Sensorelement, das zumindest einen Anschluss umfasst, wobei der Anschluss in mindestens einem Verbindungspunkt über entsprechende Verbindungsmittel mit mindestens einer Leitung eines Anschlusskabels elektrisch kontaktiert ist. Die abisolierten Enden des Anschlusskabels können beispielsweise jeweils durch eine Crimpverbindung elektrisch mit den Verbindungsmitteln verbunden werden. Das Ende der mindestens einen Leitung des Anschlusskabels ist mit den Verbindungsmitteln zumindest teilweise in den Halter eingebettet, so dass ein Vorformling entsteht, wobei der mindestens eine Verbindungspunkt für die Verbindung mit dem Sensorelement ausgespart ist. Nach der Kontaktierung des Sensorelements kann der Halter mit dem Sensorelement mit einer Kunststoffhülle umspritzt werden.

### Offenbarung der Erfindung

Der Halter für eine Sensoreinheit mit den Merkmalen des unabhängigen Patentanspruchs 1 und die korrespondierenden Sensoreinheit für ein Fahrzeug mit den Merkmalen des unabhängigen Patentanspruchs 8 haben den Vorteil, dass eine neue Prozesskette möglich ist, welche es erlaubt die Ausführung eines Steckermoduls von der elektrischen Kontaktierung bis zur finalen Kundenapplikation zu trennen. Dadurch kann der Thermoplastspritzprozess auf die spezielle Anwendung hin optimiert werden. So können beispielsweise die Prozessdaten für das Steckermodul, wie Steckeraußenkontur, Steckerinnenkontur usw., ohne einen Einfluss auf den Messwertgeber optimiert werden. Der kundenspezifische Applikationsstecker, welcher für die Anbindung an das Fahrzeug erforderlich ist, wird durch ein variables Verbindungskonzept umgesetzt, welches eine weitere Modularität der Sensoreinheit erlaubt. Durch die Separierung in die Bestandteile Halter, Messwertgeber, Steckermodul und Umspritzung können die Prozesszeiten beim Thermoplastspritzprozess in vorteilhafter Weise soweit reduziert werden, dass mit minimaler Kavitätenzahl und kleiner Werkzeuggröße geringe Taktzeiten und somit hohe Fertigungsvolumen erreicht werden können. Somit ermöglichen Ausführungsformen der vorliegenden Erfindung in vorteilhafter Weise geringe Zykluszeiten für die Umspritzvorgänge und eine Erhöhung der Automatisation auf der Sensorseite. Zudem kann eine hohe Standardisierung und dadurch eine geringere Anzahl an Werkzeugen für den Halter erzielt werden. Des Weiteren kann eine mechanische Standardschnittstelle zwischen Steckermodul und Ausrichtungsbauteil eingesetzt werden, welche es ermöglicht, dass das Ausrichtungsbauteil mit den ausgerichteten zweiten Enden der mindestens zwei Stromschienen bzw. der ausgerichteten externen Schnittstelle vor dem Umspritzvorgang in eine entsprechende Aufnahme im Steckermodul eingeführt wird. Dadurch ergeben sich immer gleiche Bedingungen beim Umspritzen und Abdichten des Steckermoduls und des Halters. Variationen der Steckermodule bzw. der Abgangsrichtung der zweiten Enden der mindestens zwei Stromschienen bzw. der externen Schnittstelle können einfach durch eine Änderung der Ausrichtung des Ausrichtungsbauteils realisiert werden. Hierbei kann die Ausrichtung des Ausrichtungsbauteils in Bezug auf die Ausrichtung des Halters bzw. der ersten Enden der mindestens zwei Stromschienen über Dreh- und/oder Kippbewegungen mittels eines Greifwerkzeugs eines Roboters an das korrespondierende Steckermodul angepasst werden.

Zudem kann eine kundenspezifische Varianz der Applikationen in Form von geometrischen Anforderungen und/oder Zusatzanforderungen wie beispielsweise Abdichtungsfunktionen oder Befestigungsfunktionen einfach durch montierbare oder angespritzte Befestigungsmodule realisiert werden, welche keinen Einfluss auf innere Komponenten der Sensoreinheit haben. Das Befestigungsmodul, welches beispielsweise eine Lasche und eine eingespritzte Buchse umfasst, kann an das Steckermodul oder an die Umspritzung angeformt werden. Zudem können verschieden ASIC-Packages, wie beispielsweise BGA (Ball Grid Array), während der Fertigung eines vormontierten Messwertgebers realisiert werden, welcher ein Sensorelement und eine Sensorschaltung umfasst.

Ausführungsformen der vorliegenden Erfindung stellen einen Halter für eine Sensoreinheit, mit mindestens zwei Stromschienen zur Verfügung. Eine interne elektrische Schnittstelle zu einem Messwertgeber ist an ersten Enden der mindestens zwei Stromschienen ausgebildet, und eine externe elektrische Schnittstelle für ein Steckermodul ist an zweiten Enden der mindestens zwei Stromschienen ausgebildet. Hierbei umgreift ein Ausrichtungsbauteil die mindestens zwei Stromschienen und ist zwischen der internen elektrischen Schnittstelle und der externen elektrischen Schnittstelle angeordnet, wobei eine Ausrichtung des Ausrichtungsbauteils eine Abgangsrichtung der zweiten Enden der mindestens zwei Stromschienen und der externen elektrischen Schnittstelle festlegt.

Zudem wird eine Sensoreinheit für ein Fahrzeug, mit einem solchen Halter, einem Messwertgeber und einem Steckermodul vorgeschlagen.

Des Weiteren wird ein Montageverfahren für eine solche Sensoreinheit vorgeschlagen, welche einen Halter mit mindestens zwei Stromschienen, einen Messwertgeber und ein Steckermodul umfasst. Eine interne elektrische Schnittstelle zum Messwertgeber ist an ersten Enden der mindestens zwei Stromschienen ausgebildet, und eine externe elektrische Schnittstelle für das Steckermodul ist an zweiten Enden der mindestens zwei Stromschienen ausgebildet. Hierbei wird ein Ausrichtungsbauteil, welches die mindestens zwei Stromschienen umgreift und zwischen der internen elektrischen Schnittstelle und der externen elektrischen Schnittstelle angeordnet ist, ausgerichtet und dadurch eine Abgangsrichtung der zweiten Enden der mindestens zwei Stromschienen und der externen elektrischen Schnittstelle festlegt.

Durch die in den abhängigen Ansprüchen aufgeführten Maßnahmen und Weiterbildungen sind vorteilhafte Verbesserungen des im unabhängigen Patentanspruch 1 angegebenen Halters für eine Sensoreinheit und der im unabhängigen Patentanspruch 8 angegebenen Sensoreinheit für ein Fahrzeug und des im unabhängigen Patentanspruch 14 angegebenen Montageverfahrens für eine solche Sensoreinheit möglich.

Besonders vorteilhaft ist, dass die mindestens zwei Stromschienen jeweils einen Verformungsbereich aufweisen können. Die mindestens zwei Stromschienen können jeweils im Verformungsbereich verdreht und/oder abgewinkelt werden, so dass sich die Ausrichtung der zweiten Enden der mindestens zwei Stromschienen und der externen elektrischen Schnittstelle von der Ausrichtung der ersten Enden der mindestens zwei Stromschienen und der internen elektrischen Schnittstelle unterscheiden kann. Dadurch kann die Abgangsrichtung der zweiten Enden der mindestens zwei Stromschienen einfach an das zugehörige Steckermodul angepasst werden.

In vorteilhafter Ausgestaltung des Halters können die ersten Enden der mindestens zwei Stromschienen jeweils als flächige Kontaktelemente ausgeführt werden, mit welchen der Messwertgeber elektrisch kontaktiert werden kann. Zudem kann ein Grundkörper die mindestens zwei Stromschienen im Bereich der internen elektrischen Schnittstelle unter Auslassung der Kontaktelemente umgreifen und eine Aufnahme für den Messwertgeber ausbilden. Des Weiteren können die Verformungsbereiche der mindestens zwei Stromschienen zwischen dem Ausrichtungsbauteil und dem Grundkörper angeordnet werden.

In weiterer vorteilhafter Ausgestaltung des Halters können die zweiten Enden der mindestens zwei Stromschienen jeweils als Kontaktpins des Steckermoduls ausgeführt werden, welche mit Gegenkontakten eines Einsteckmoduls elektrisch kontaktiert werden können. Dadurch kann das Steckermodul ohne elektrische Kontakte bzw. Pins gefertigt werden. Die Kontaktpins sind Teil des Sensormoduls bzw. Halters.

In vorteilhafter Ausgestaltung der Sensoreinheit kann der Messwertgeber mit den flächigen Kontaktelementen der mindestens zwei Stromschienen elektrisch kontaktiert werden. Zudem kann der Messwertgeber in die Aufnahme im Grundkörper eingelegt werden.

In weiterer vorteilhafter Ausgestaltung der Sensoreinheit kann das Ausrichtungsbauteil in eine Aufnahme des Steckermoduls eingeführt werden. Dadurch kann der Halter vor einem Umspritzvorgang einfach mit dem Steckermodul verbunden werden.

In weiterer vorteilhafter Ausgestaltung der Sensoreinheit können das Steckermodul, der Halter und das Ausrichtungsbauteil zumindest teilweise von einer Kunststoffumspritzung umgeben werden. Zudem kann ein Befestigungsmodul an das Steckermodul oder an die Kunststoffumspritzung angeformt werden.

In weiterer vorteilhafter Ausgestaltung des Montageverfahrens kann das Ausrichtungsbauteil und die zweiten Enden der mindestens zwei Stromschienen in ein Steckermodul eingeführt werden. Zudem können die zweiten Enden der mindestens zwei Stromschienen Kontaktpins in einem Aufnahmeraum des Steckermoduls ausbilden, welche mit Gegenkontakten eines in den Aufnahmeraum einführbaren Einsteckmoduls elektrisch kontaktiert werden können.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Darstellung eines Ausführungsbeispiels eines erfindungsgemäßen Halters für eine Sensoreinheit in einem Ausgangszustand.
Fig. 2 zeigt eine schematische perspektivische Darstellung des erfindungsgemäßen Halters aus Fig. 1 in einem verdrehten ersten Montagezustand.
Fig. 3 zeigt eine schematische perspektivische Darstellung des erfindungsgemäßen Halters aus Fig. 1 in einem abgewinkelten zweiten Montagezustand.
Fig. 4 zeigt eine schematische perspektivische Darstellung des erfindungsgemäßen Halters aus Fig. 1 in einem verdrehten und abgewinkelten dritten Montagezustand.
Fig. 5 zeigt eine schematische perspektivische Darstellung eines Ausführungsbeispiels eines Steckermoduls für eine erfindungsgemäße Sensoreinheit für ein Fahrzeug.
Fig. 6 zeigt eine schematische perspektivische Darstellung des erfindungsgemäßen Halters aus Fig. 3 und dem montierten Steckermodul aus Fig. 5.
Fig. 7 zeigt eine schematische perspektivische Darstellung eines Ausführungsbeispiels einer erfindungsgemäßen Sensoreinheit mit dem erfindungsgemäßen Halter aus Fig. 3 und dem Steckermodul aus Fig. 5.

### Ausführungsformen der Erfindung

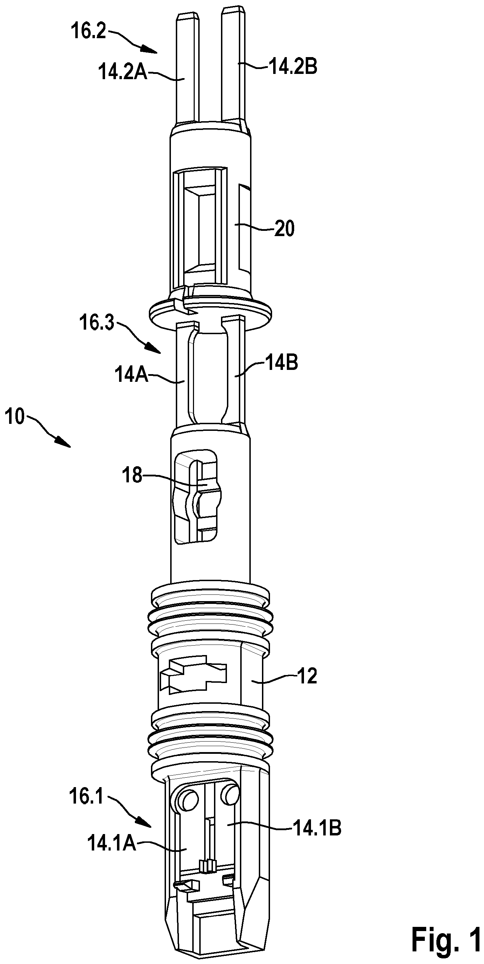

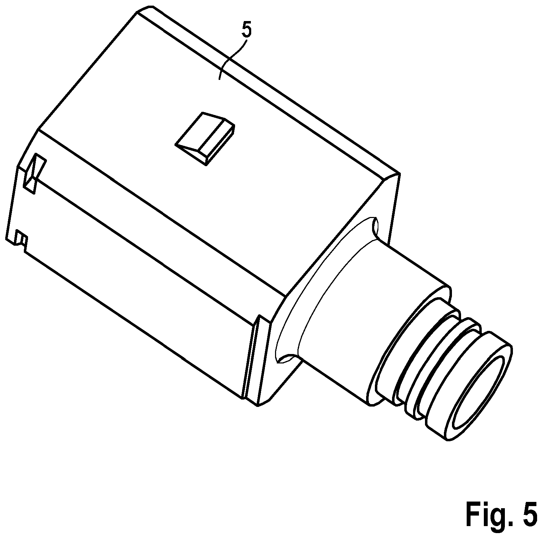

Wie aus Fig. 1 bis 7 ersichtlich ist, umfassen die dargestellten Ausführungsbeispiele eines erfindungsgemäßen Halters 10, 10A, 10B, 10C für eine Sensoreinheit (1) jeweils mindestens zwei Stromschienen 14A, 14B. Eine interne elektrische Schnittstelle 16.1 zu einem Messwertgeber 3 ist an ersten Enden der mindestens zwei Stromschienen 14A, 14B ausgebildet. Eine externe elektrische Schnittstelle 16.2, 16.2A, 16.2B, 16.2C für ein Steckermodul 5 ist an zweiten Enden der mindestens zwei Stromschienen 14A, 14B ausgebildet. Hierbei umgreift ein Ausrichtungsbauteil 20 die mindestens zwei Stromschienen 14A, 14B und ist zwischen der internen elektrischen Schnittstelle 16.1 und der externen elektrischen Schnittstelle 16.2, 16.2A, 16.2B, 16.2C angeordnet. Eine Ausrichtung des Ausrichtungsbauteils 20 legt eine Abgangsrichtung der zweiten Enden der mindestens zwei Stromschienen 14A, 14B und der externen elektrischen Schnittstelle 16.2, 16.2A, 16.2B, 16.2C fest.

In den dargestellten Ausführungsbeispielen weist der Halter 10, 10A, 10B, 10C jeweils zwei Stromschienen 14A, 14B mit einem Verformungsbereich 16.3, 16.3A, 16.3B, 16.3C auf. Die zwei Stromschienen 14A, 14B können jeweils im Verformungsbereich 16.3, 16.3A, 16.3B, 16.3C verdreht und/oder abgewinkelt werden, so dass sich die Ausrichtung der zweiten Enden der beiden Stromschienen 14A, 14B und der externen elektrischen Schnittstelle 16.2, 16.2A, 16.2B, 16.2C von der Ausrichtung der ersten Enden der beiden Stromschienen 14A, 14B und der internen elektrischen Schnittstelle 16.1 unterscheidet. Dadurch kann die Abgangsrichtung der zweiten Enden der beiden Stromschienen 14A, 14B und der externen elektrischen Schnittstelle 16.2, 16.2A, 16.2B, 16.2C einfach an das kundenspezifische Steckermodul 5 angepasst werden, welches für die Anbindung an das Fahrzeug erforderlich ist.

Die dargestellten Ausführungsbeispiele des Halters 10, 10A, 10B, 10C unterscheiden sich in der Ausrichtung der zweiten Enden der beiden Stromschienen 14A, 14B und der externen elektrischen Schnittstelle 16.2, 16.2A, 16.2B, 16.2C zur Ausrichtung der ersten Enden der beiden Stromschienen 14A, 14B und der internen elektrischen Schnittstelle 16.1.

Wie aus Fig. 1 weiter ersichtlich ist, entspricht die Ausrichtung der zweiten Enden der beiden Stromschienen 14A, 14B und der externen elektrischen Schnittstelle 16.2 im der dargestellten Ausgangszustand der Ausrichtung der ersten Enden der beiden Stromschienen 14A, 14B und der internen elektrischen Schnittstelle 16.1.

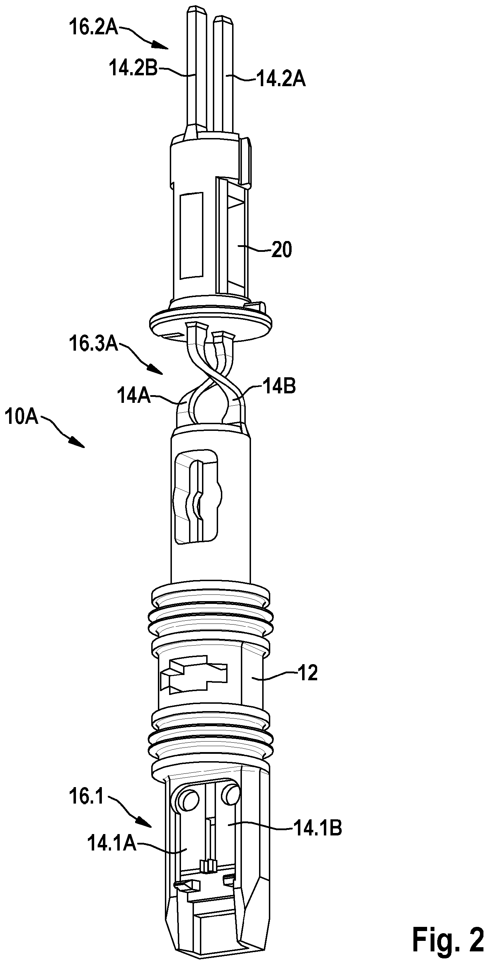

Wie aus Fig. 2 weiter ersichtlich ist, sind die zweiten Enden der beiden Stromschienen 14A, 14B und die externe elektrischen Schnittstelle 16.2A im dargestellten ersten Montagezustand um 90° um eine Längsachse des Halters 10A gegenüber den ersten Enden der beiden Stromschienen 14A, 14B und der internen elektrischen Schnittstelle 16.1 verdreht.

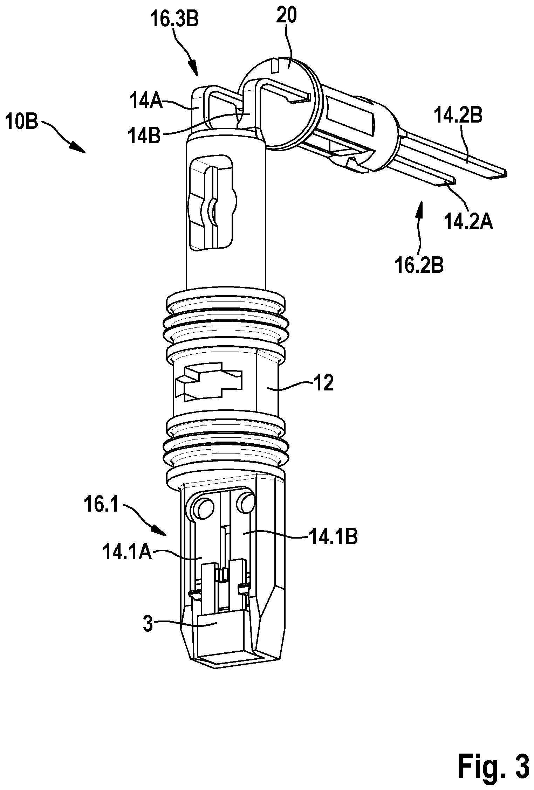

Wie aus Fig. 3 weiter ersichtlich ist, sind die zweiten Enden der beiden Stromschienen 14A, 14B und die externe elektrischen Schnittstelle 16.2B im dargestellten zweiten Montagezustand um 90° gegenüber den ersten Enden der beiden Stromschienen 14A, 14B und der internen elektrischen Schnittstelle 16.1 abgewinkelt.

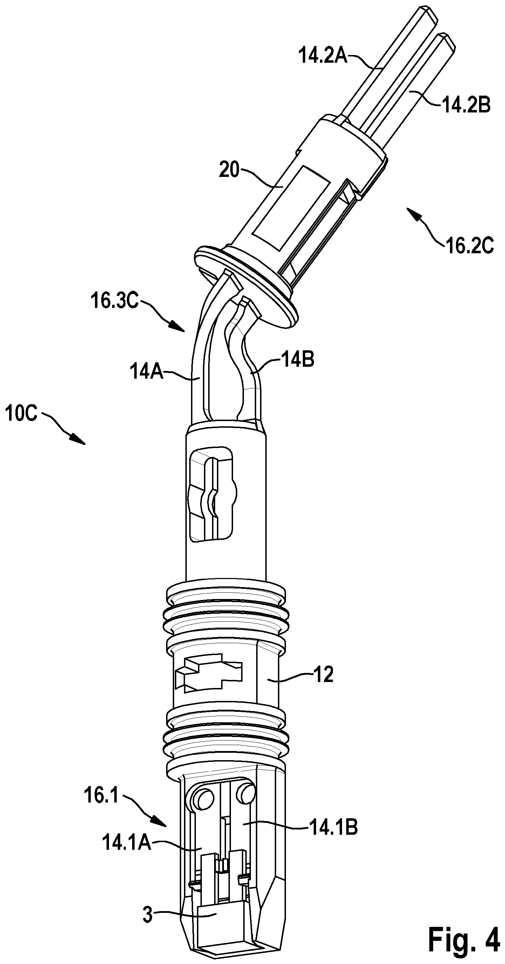

Wie aus Fig. 4 weiter ersichtlich ist, sind die zweiten Enden der beiden Stromschienen 14A, 14B und die externe elektrischen Schnittstelle 16.2C im dargestellten dritten Montagezustand um 45° um eine Längsachse des Halters 10A gegenüber den ersten Enden der beiden Stromschienen 14A, 14B und der internen elektrischen Schnittstelle 16.1 verdreht und um 45° gegenüber den ersten Enden der beiden Stromschienen 14A, 14B und der internen elektrischen Schnittstelle 16.1 abgewinkelt.

Wie aus Fig. 1 bis 4 weiter ersichtlich ist, sind die ersten Enden der mindestens zwei Stromschienen 14A, 14B jeweils als flächige Kontaktelemente 14.1A, 14.1B ausgeführt, mit welchen der Messwertgeber 3 elektrisch kontaktiert ist. Zudem umfasst der Halter 10, 10A, 10B, 10C einen Grundkörper 12, welcher die mindestens zwei Stromschienen 14A, 14B im Bereich der internen elektrischen

Schnittstelle 16.1 unter Auslassung der Kontaktelemente 14.1A, 14.1B umgreift und eine Aufnahme für den Messwertgeber 3 ausbildet. Wie aus Fig. 1 weiter ersichtlich ist, wird der Grundkörper 12 des Halters 10 durch das Umspritzen eines symmetrischen mittels Verbindungsbrücken 19 verbundenen Stromschienenpaares 16A, 16B (z.B. S-CuSn6 oder CuSn4) mit Kunststoff (z.B. PA612 oder PPS) erzeugt. Nach dieser Umspritzung entsteht der Halter 10 mit der internen elektrischen Schnittstelle 14.1 und der externen elektrischen Schnittstelle 14.2. In diesem Halter 10 werden die in einem Fenster des Grundkörpers 12 angeordneten Verbindungsbrücken 18 zwischen den Stromschienen 14A, 14B durchtrennt und der Messwertgeber 3 in eine korrespondierende Aufnahme eingelegt. Der Messwertgeber 3 ist in den in Fig. 3, 4, 6 und 7 dargestellten Ausführungsbeispielen im Bereich der internen Schnittstelle 16.1 mittels Schweißen mit den flächigen Kontaktelementen 14.1A, 14.1B der Stromschienen 14A, 14B verbunden.

Wie aus Fig. 1 bis 7 weiter ersichtlich ist, sind die Verformungsbereiche 16.3, 16.3A, 16.3B, 16.3C der beiden Stromschienen 14A, 14B zwischen dem Ausrichtungsbauteil 20 und dem Grundkörper 12 angeordnet.

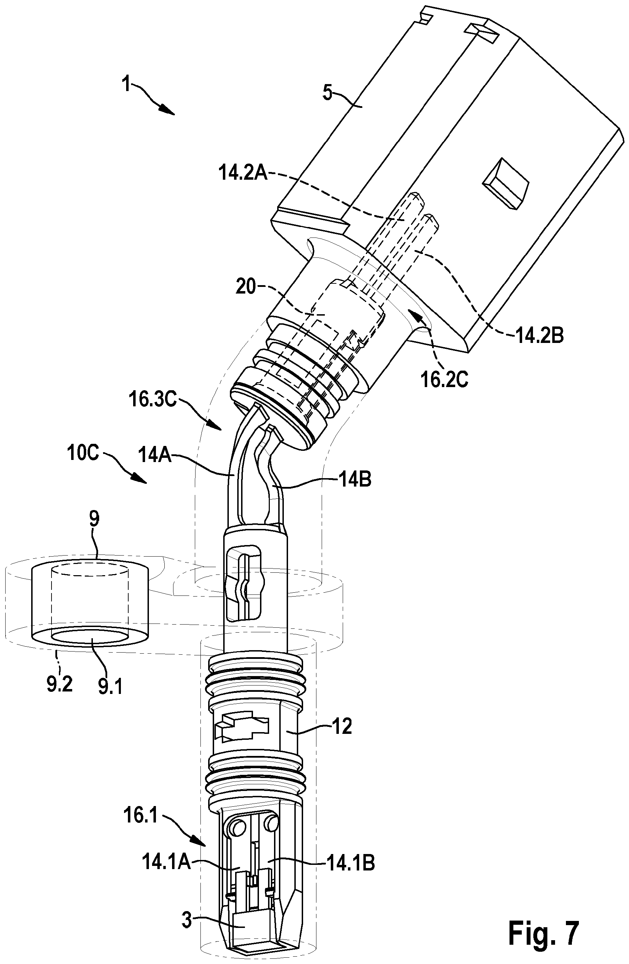

Wie aus Fig. 7 weiter ersichtlich ist, umfasst das dargestellte Ausführungsbeispiel einer erfindungsgemäßen Sensoreinheit 1 für ein Fahrzeug einen Halter 10C, welcher zwei Stromschienen 14A, 14B umfasst, einen Messwertgeber 3 und ein Steckermodul 5. Die interne elektrische Schnittstelle 16.1 zum Messwertgeber 3 ist an ersten Enden der beiden Stromschienen 14A, 14B ausgebildet. Die externe elektrische Schnittstelle 16.2C für das Steckermodul 5 ist an zweiten Enden der beiden Stromschienen 14A, 14B ausgebildet. Zudem sind das Steckermodul 5, der Halter 10C und das Ausrichtungsbauteil 20 zumindest teilweise von einer durchsichtig dargestellten Kunststoffumspritzung 7 umgeben. Zudem ist ein Befestigungsmodul 9, welches eine in einer Lasche 9.2 eingespritzte Buchse 9.1 umfasst, an die Kunststoffumspritzung 7 angeformt ist. Durch diese Flexibilität können für den Kunden verschiedene Laschenstellungen realisieren werden. Die Varianz in der dadurch entstehenden Sensoreinheit 1 können durch relativ einfache Werkzeugwechselsätze realisiert werden. Bei einem alternativen nicht dargestellten Ausführungsbeispiel ist das Befestigungsmodul 9 mit der Lasche 9.2 und der Buchse 9.1 an das Steckermodul 5 angeformt.

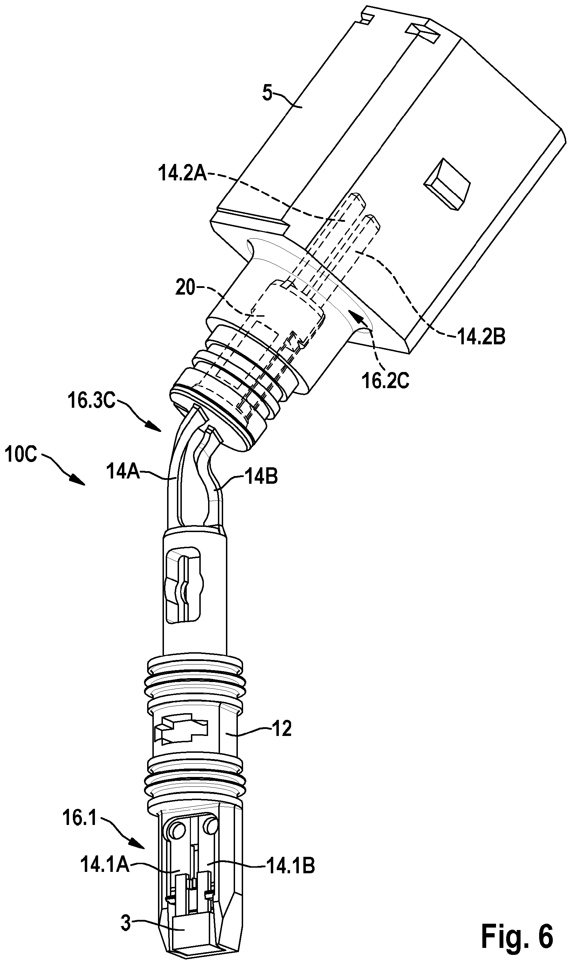

Wie aus Fig. 6 weiter ersichtlich ist, wird das ausgerichtete Ausrichtungsbauteil 20 mit den ausgerichteten als Kontaktpins 14.2A, 14.2B ausgeführten zweiten Enden der beiden Stromschienen 14A, 14B und der ausgerichteten externen elektrischen Schnittstelle 16.2C vor dem Umspritzvorgang in eine Aufnahme des Steckermoduls 5 eingeführt. Die als Kontaktpins 14.1A, 14.1B des Steckermoduls 5 ausgeführten zweiten Enden der beiden Stromschienen 14A, 14B können jeweils mit Gegenkontakten eines Einsteckmoduls elektrisch kontaktiert werden, welches in das Steckermodul 6 eingesteckt wird.

Bei einem erfindungsgemäßen Montageverfahren für eine Sensoreinheit 1, welche einen Halter 10, 10A, 10B, 10C mit mindestens zwei Stromschienen 14A, 14B, einen Messwertgeber 3 und ein Steckermodul 5 umfasst, wobei eine interne elektrische Schnittstelle 16.1 zum Messwertgeber 3 an ersten Enden der mindestens zwei Stromschienen 14A, 14B ausgebildet ist, und eine externe elektrische Schnittstelle 16.2, 16.2A, 16.2B, 16.2C für das Steckermodul 5 an zweiten Enden der mindestens zwei Stromschienen 14A, 14B ausgebildet ist, wird ein Ausrichtungsbauteil 20, welches die mindestens zwei Stromschienen 14A, 14B umgreift und zwischen der internen elektrischen Schnittstelle 16.1 und der externen elektrischen Schnittstelle 16.2, 16.2A, 16.2B, 16.2C angeordnet ist, ausgerichtet und legt dadurch eine Abgangsrichtung der zweiten Enden der mindestens zwei Stromschienen 14A, 14B und der externen elektrischen Schnittstelle 16.2, 16.2A, 16.2B, 16.2C fest.

Nach dem Ausrichten werden das Ausrichtungsbauteil 20 und die zweiten Enden der mindestens zwei Stromschienen 14A, 14B in das Steckermodul 5 eingeführt. Wie oben bereits ausgeführt ist, bilden die zweiten Enden der mindestens zwei Stromschienen 14A, 14B Kontaktpins 14.1A, 14.1B in einem Aufnahmeraum des Steckermoduls 5 aus, welche mit Gegenkontakten eines in den Aufnahmeraum einführbaren Einsteckmoduls elektrisch kontaktiert werden können. Anschließend werden das Steckermodul 5, der Halter 10, 10A, 10B, 10C und das Ausrichtungsbauteil 20 zumindest teilweise mit Kunststoff umspritzt, wobei das Befestigungsmodul 9 im dargestellten Ausführungsbeispiel an die Kunststoffumspritzung 7 angeformt wird.

Durch den beschriebenen Aufbau kann die Sensoreinheit 1 auch fertigungstechnisch in Steckermodul 5, Halter 10, 10A, 10B, 10C mit Messwertgeber 3 bzw. Sensormodul und Umspritzung 7 unterschieden und getrennt dargestellt werden. Das Steckermodul 5 wird ohne Kontakte oder Pins gefertigt, die Kontakte sind ein Teil des Halters 10, 10A, 10B, 10C bzw. Sensormoduls. Die Buchse 9.2 des Befestigungsmoduls 9 ist in der Umspritzung 7 oder alternativ im Steckermodul 5 integriert. Dadurch liegt das Handling des Befestigungsmoduls außerhalb der Hauptproduktionslinie.

## Patentansprüche

1. Halter (10, 10A, 10B, 10C) für eine Sensoreinheit (1), mit mindestens zwei einteiligen Stromschienen (14A, 14B), wobei eine interne elektrische Schnittstelle (16.1) zu einem Messwertgeber (3) an ersten Enden der mindestens zwei Stromschienen (14A, 14B) ausgebildet ist, und eine externe elektrische Schnittstelle (16.2, 16.2A, 16.2B, 16.2C) für ein Steckermodul (5) an zweiten Enden der mindestens zwei Stromschienen (14A, 14B) ausgebildet ist, **dadurch gekennzeichnet, dass** ein Ausrichtungsbauteil (20) die mindestens zwei Stromschienen (14A, 14B) umgreift und zwischen der internen elektrischen Schnittstelle (16.1) und der externen elektrischen Schnittstelle (16.2, 16.2A, 16.2B, 16.2C) angeordnet ist, wobei eine Ausrichtung des Ausrichtungsbauteils (20) veränderbar ist, welche eine Abgangsrichtung der zweiten Enden der mindestens zwei Stromschienen (14A, 14B) und der externen elektrischen Schnittstelle (16.2, 16.2A, 16.2B, 16.2C) festlegt und an das Steckermodul (5) anpasst.

2. Halter (10, 10A, 10B, 10C) nach Anspruch 1, **dadurch gekennzeichnet, dass** die mindestens zwei Stromschienen (14A, 14B) jeweils einen Verformungsbereich (16.3, 16.3A, 16.3B, 16.3C) aufweisen.

3. Halter (10, 10A, 10B, 10C) nach Anspruch 2, **dadurch gekennzeichnet, dass** die mindestens zwei Stromschienen (14A, 14B) jeweils im Verformungsbereich (16.3, 16.3A, 16.3B, 16.3C) verdreht und/oder abgewinkelt sind, so dass sich die Ausrichtung der zweiten Enden der mindestens zwei Stromschienen (14A, 14B) und der externen elektrischen Schnittstelle (16.2, 16.2A, 16.2B, 16.2C) von der Ausrichtung der ersten Enden der mindestens zwei Stromschienen (14A, 14B) und der internen elektrischen Schnittstelle (16.1) unterscheidet.

4. Halter (10, 10A, 10B, 10C) nach einem der Ansprüche 1 bis 3, **dadurch gekennzeichnet, dass** die ersten Enden der mindestens zwei Stromschienen (14A, 14B) jeweils als flächige Kontaktelemente (14.1A, 14.1B) ausgeführt sind, mit welchen der Messwertgeber (3) elektrisch kontaktierbar ist.

5. Halter (10, 10A, 10B, 10C) nach Anspruch 4, **dadurch gekennzeichnet, dass** ein Grundkörper (12) die mindestens zwei Stromschienen (14A, 14B) im Bereich der internen elektrischen Schnittstelle (16.1) unter Auslassung der Kontaktelemente (14.1A, 14.1B) umgreift und eine Aufnahme für den Messwertgeber (3) ausbildet.

6. Halter (10, 10A, 10B, 10C) nach Anspruch 5, **dadurch gekennzeichnet, dass** die Verformungsbereiche (16.3, 16.3A, 16.3B, 16.3C) der mindestens zwei Stromschienen (14A, 14B) zwischen dem Ausrichtungsbauteil (20) und dem Grundkörper (12) angeordnet sind.

7. Halter (10, 10A, 10B, 10C) nach einem der Ansprüche 1 bis 6, **dadurch gekennzeichnet, dass** die zweiten Enden der mindestens zwei Stromschienen (14A, 14B) jeweils als Kontaktpins (14.1A, 14.1B) des Steckermoduls (5) ausgeführt sind, welche mit Gegenkontakten eines Einsteckmoduls elektrisch kontaktierbar sind.

8. Sensoreinheit (1) für ein Fahrzeug, mit einem Halter (10, 10A, 10B, 10C), welcher mindestens zwei einteilige Stromschienen (14A, 14B) umfasst, einem Messwertgeber (3) und einem Steckermodul (5), wobei eine interne elektrische Schnittstelle (16.1) zum Messwertgeber (3) an ersten Enden der mindestens zwei Stromschienen (14A, 14B) ausgebildet ist, und eine externe elektrische Schnittstelle (16.2, 16.2A, 16.2B, 16.2C) für das Steckermodul (5) an zweiten Enden der mindestens zwei Stromschienen (14A, 14B) ausgebildet ist, **dadurch gekennzeichnet, dass** der Halter (10, 10A, 10B, 10C) nach zumindest einem der Ansprüche 1 bis 7 ausgeführt ist.

9. Sensoreinheit (1) nach Anspruch 8, **dadurch gekennzeichnet, dass** der Messwertgeber (3) mit den flächigen Kontaktelementen (14.1A, 14.1B) der mindestens zwei Stromschienen (14A, 14B) elektrisch kontaktiert ist.

10. Sensoreinheit (1) nach Anspruch 8 oder 9, **dadurch gekennzeichnet, dass** der Messwertgeber (3) in die Aufnahme im Grundkörper (12) eingelegt ist.

11. Sensoreinheit (1) nach einem der Ansprüche 8 bis 10, **dadurch gekennzeichnet, dass** das Ausrichtungsbauteil (20) in eine Aufnahme des Steckermoduls (5) eingeführt ist.

12. Sensoreinheit (1) nach einem der Ansprüche 8 bis 11, **dadurch gekennzeichnet, dass** das Steckermodul (5), der Halter (10, 10A, 10B, 10C) und das Ausrichtungsbauteil (20) zumindest teilweise von einer Kunststoffumspritzung (7) umgeben sind.

13. Sensoreinheit (1) nach Anspruch 12, **dadurch gekennzeichnet, dass** ein Befestigungsmodul (9) an das Steckermodul (5) oder an die Kunststoffumspritzung (7) angeformt ist.

14. Montageverfahren für eine Sensoreinheit (1), welche einen Halter (10, 10A, 10B, 10C) mit mindestens zwei einteiligen Stromschienen (14A, 14B), einen Messwertgeber (3) und ein Steckermodul (5) umfasst, wobei eine interne elektrische Schnittstelle (16.1) zum Messwertgeber (3) an ersten Enden der mindestens zwei Stromschienen (14A, 14B) ausgebildet ist, und eine externe elektrische Schnittstelle (16.2, 16.2A, 16.2B, 16.2C) für das Steckermodul (5) an zweiten Enden der mindestens zwei Stromschienen (14A, 14B) ausgebildet ist, **dadurch gekennzeichnet, dass** ein Ausrichtungsbauteil (20), welches die mindestens zwei Stromschienen (14A, 14B) umgreift und zwischen der internen elektrischen Schnittstelle (16.1),und der externen elektrischen Schnittstelle (16.2, 16.2A, 16.2B, 16.2C) angeordnet ist, ausgerichtet und dadurch eine Abgangsrichtung der zweiten Enden der mindestens zwei Stromschienen (14A, 14B) und der externen elektrischen Schnittstelle (16.2, 16.2A, 16.2B, 16.2C) festlegt und an das Steckermodul (5) angepasst wird.

15. Montageverfahren nach Anspruch 14, **dadurch gekennzeichnet, dass** das Ausrichtungsbauteil (20) und die zweiten Enden der mindestens zwei Stromschienen (14A, 14B) in das Steckermodul (5) eingeführt werden.

16. Montageverfahren nach Anspruch 15, **dadurch gekennzeichnet, dass** die zweiten Enden der mindestens zwei Stromschienen (14A, 14B) Kontaktpins (14.1A, 14.1B) in einem Aufnahmeraum des Steckermoduls (5) ausbilden, welche mit Gegenkontakten eines in den Aufnahmeraum einführbaren Einsteckmoduls elektrisch kontaktierbar sind.

17. Montageverfahren nach einem der Ansprüche 14 bis 16, **dadurch gekennzeichnet, dass** das Steckermodul (5), der Halter (10, 10A, 10B, 10C) und das Ausrichtungsbauteil (20) zumindest teilweise mit Kunststoff umspritzt werden.

18. Montageverfahren nach Anspruch 17, **dadurch gekennzeichnet, dass** ein Befestigungsmodul (9) an das Steckermodul (5) oder an die Kunststoffumspritzung (7) angeformt wird.

## Claims

1. Holder (10, 10A, 10B, 10C) for a sensor unit (1), comprising at least two one-piece busbars (14A, 14B), wherein an internal electrical interface (16.1) to a measuring transducer (3) is formed at first ends of the at least two busbars (14A, 14B), and an external electrical interface (16.2, 16.2A, 16.2B, 16.2C) for a plug module (5) is formed at second ends of the at least two busbars (14A, 14B), **characterized in that** an orientation component (20) engages around the at least two busbars (14A, 14B) and is arranged between the internal electrical interface (16.1) and the external electrical interface (16.2, 16.2A, 16.2B, 16.2C), wherein an orientation of the orientation component (20), which orientation defines an outgoing direction of the second ends of the at least two busbars (14A, 14B) and of the external electrical interface (16.2, 16.2A, 16.2B, 16.2C) and matches said outgoing direction to the plug module (5), can be changed.

2. Holder (10, 10A, 10B, 10C) according to Claim 1, **characterized in that** the at least two busbars (14A, 14B) each have a deformation region (16.3, 16.3A, 16.3B, 16.3C).

3. Holder (10, 10A, 10B, 10C) according to Claim 2, **characterized in that** the at least two busbars (14A, 14B) are each rotated and/or angled away in the deformation region (16.3, 16.3A, 16.3B, 16.3C), so that the orientation of the second ends of the at least two busbars (14A, 14B) and of the external electrical interface (16.2, 16.2A, 16.2B, 16.2C) differs from the orientation of the first ends of the at least two busbars (14A, 14B) and of the internal electrical interface (16.1).

4. Holder (10, 10A, 10B, 10C) according to one of Claims 1 to 3, **characterized in that** the first ends of the at least two busbars (14A, 14B) are each designed as planar contact elements (14.1A, 14.1B) by way of which electrical contact can be made with the measuring transducer (3).

5. Holder (10, 10A, 10B, 10C) according to Claim 4, **characterized in that** a main body (12) engages around the at least two busbars (14A, 14B) in the region of the internal electrical interface (16.1) excluding the contact elements (14.1A, 14.1B) and forms a receptacle for the measuring transducer (3).

6. Holder (10, 10A, 10B, 10C) according to Claim 5, **characterized in that** the deformation regions (16.3, 16.3A, 16.3B, 16.3C) of the at least two busbars (14A, 14B) are arranged between the orientation component (20) and the main body (12).

7. Holder (10, 10A, 10B, 10C) according to one of Claims 1 to 6, **characterized in that** the second ends of the at least two busbars (14A, 14B) are each designed as contact pins (14.1A, 14.1B) of the plug module (5), with which contact pins electrical contact can be made by way of mating contacts of a plug-in module.

8. Sensor unit (1) for a vehicle, comprising a holder (10, 10A, 10B, 10C) which comprises at least two one-piece busbars (14A, 14B), a measuring transducer (3) and a plug module (5), wherein an internal electrical interface (16.1) to the measuring transducer (3) is formed at first ends of the at least two busbars (14A, 14B), and an external electrical interface (16.2, 16.2A, 16.2B, 16.2C) for the plug module (5) is formed at second ends of the at least two busbars (14A, 14B), **characterized in that** the holder (10, 10A, 10B, 10C) is designed according to at least one of Claims 1 to 7.

9. Sensor unit (1) according to Claim 8, **characterized in that** electrical contact is made with the measuring transducer (3) by way of the planar contact elements (14.1A, 14.1B) of the at least two busbars (14A, 14B).

10. Sensor unit (1) according to Claim 8 or 9, **characterized in that** the measuring transducer (3) is placed into the receptacle in the main body (12).

11. Sensor unit (1) according to one of Claims 8 to 10, **characterized in that** the orientation component (20) is inserted into a receptacle of the plug module (5).

12. Sensor unit (1) according to one of Claims 8 to 11, **characterized in that** the plug module (5), the holder (10, 10A, 10B, 10C) and the orientation component (20) are at least partially surrounded by a plastic injection-moulded encapsulation (7).

13. Sensor unit (1) according to Claim 12, **characterized in that** a fastening module (9) is integrally formed onto the plug module (5) or onto the plastic injection-moulded encapsulation (7).

14. Assembly method for a sensor unit (1) which comprises a holder (10, 10A, 10B, 10C) comprising at least two one-piece busbars (14A, 14B), a measuring transducer (3) and a plug module (5), wherein an internal electrical interface (16.1) to the measuring transducer (3) is formed at first ends of the at least two busbars (14A, 14B), and an external electrical interface (16.2, 16.2A, 16.2B, 16.2C) for the plug module (5) is formed at second ends of the at least two busbars (14A, 14B), **characterized in that** an orientation component (20), which engages around the at least two busbars (14A, 14B) and is arranged between the internal electrical interface (16.1) and the external electrical interface (16.2, 16.2A, 16.2B, 16.2C), is oriented and as a result defines an outgoing direction of the second ends of the at least two busbars (14A, 14B) and of the external electrical interface (16.2, 16.2A, 16.2B, 16.2C) and is matched to the plug module (5).

15. Assembly method according to Claim 14, **characterized in that** the orientation component (20) and the second ends of the at least two busbars (14A, 14B) are inserted into the plug module (5).

16. Assembly method according to Claim 15, **characterized in that** the second ends of the at least two busbars (14A, 14B) form contact pins (14.1A, 14.1B) in a receiving space of the plug module (5), it being possible for electrical contact to be made with said contact pins by way of mating contacts of a plug-in module which can be inserted into the receiving space.

17. Assembly method according to one of Claims 14 to 16, **characterized in that** the plug module (5), the holder (10, 10A, 10B, 10C) and the orientation component (20) are at least partially encapsulated by injection moulding with plastic.

18. Assembly method according to Claim 17, **characterized in that** a fastening module (9) is integrally formed onto the plug module (5) or onto the plastic injection-moulded encapsulation (7).

## Revendications

1. Support (10, 10A, 10B, 10C) pour une unité de détection (1), comprenant au moins deux barres conductrices en une pièce (14A, 14B), une interface électrique interne (16.1) avec un transducteur (3) étant réalisée aux premières extrémités des au moins deux barres conductrices (14A, 14B), et une interface électrique externe (16.2, 16.2A, 16.2B, 16.2C) pour un module de connecteur (5) étant réalisée aux deuxièmes extrémités des au moins deux barres conductrices (14A, 14B),
**caractérisé en ce qu'**un composant d'orientation (20) entoure les au moins deux barres conductrices (14A, 14B) et est disposé entre l'interface électrique interne (16.1) et l'interface électrique externe (16.2, 16.2A, 16.2B, 16.2C), une orientation du composant d'orientation (20) étant variable, qui définit une direction de sortie des deux extrémités des au moins deux barres conductrices (14A, 14B) et de l'interface électrique externe (16.2, 16.2A, 16.2B, 16.2C) et les adapte au module de connecteur (5).

2. Support (10, 10A, 10B, 10C) selon la revendication 1, **caractérisé en ce que** les au moins deux barres conductrices (14A, 14B) présentent respectivement une zone de déformation (16.3, 16.3A, 16.3B, 16.3C).

3. Support (10, 10A, 10B, 10C) selon la revendication 2, **caractérisé en ce que** les au moins deux barres conductrices (14A, 14B) sont respectivement tordues et/ou coudées dans la zone de déformation (16.3, 16.3A, 16.3B, 16.3C) de sorte que l'orientation des deuxièmes extrémités des au moins deux barres conductrices (14A, 14B) et de l'interface électrique externe (16.2, 16.2A, 16.2B, 16.2C) est différente de l'orientation des premières extrémités des au moins deux barres conductrices (14A, 14B) et de l'interface électrique interne (16.1).

4. Support (10, 10A, 10B, 10C) selon l'une quelconque des revendications 1 à 3, **caractérisé en ce que** les premières extrémités des au moins deux barres conductrices (14A, 14B) sont respectivement configurées sous forme d'éléments de contact plans (14.1A, 14.1B) qui permettent d'établir un contact électrique avec le transducteur (3).

5. Support (10, 10A, 10B, 10C) selon la revendication 4, **caractérisé en ce qu'**un corps de base (12) entoure les au moins deux barres conductrices (14A, 14B) au niveau de l'interface électrique interne (16.1) en excluant les éléments de contact (14.1A, 14.1B) et réalise un logement pour le transducteur (3).

6. Support (10, 10A, 10B, 10C) selon la revendication 5, **caractérisé en ce que** les zones de déformation (16.3, 16.3A, 16.3B, 16.3C) des au moins deux barres conductrices (14A, 14B) sont disposées entre le composant d'orientation (20) et le corps de base (12).

7. Support (10, 10A, 10B, 10C) selon l'une quelconque des revendications 1 à 6, **caractérisé en ce que** les deuxièmes extrémités des au moins deux barres conductrices (14A, 14B) sont respectivement configurées sous forme de broches de contact (14.1A, 14.1B) du module de connecteur (5) qui peuvent être mises en contact électrique avec des contacts complémentaires d'un module enfichable.

8. Unité de détection (1) pour un véhicule, comprenant un support (10, 10A, 10B, 10C) qui comprend au moins deux barres conductrices (14A, 14B) en une pièce, un transducteur (3) et un module de connecteur (5), une interface électrique interne (16.1) avec le transducteur (3) étant réalisée aux premières extrémités des au moins deux barres conductrices (14A, 14B), et une interface électrique externe (16.2, 16.2A, 16.2B, 16.2C) pour le module de connecteur (5) étant réalisée aux deuxièmes extrémités des au moins deux barres conductrices (14A, 14B),
**caractérisée en ce que** le support (10, 10A, 10B, 10C) est configuré selon au moins l'une des revendications 1 à 7.

9. Unité de détection (1) selon la revendication 8, **caractérisée en ce que** le transducteur (3) est mis en contact électrique avec les éléments de contact plans (14.1A, 14.1B) des au moins deux barres conductrices (14A, 14B).

10. Unité de détection (1) selon la revendication 8 ou 9, **caractérisée en ce que** le transducteur (3) est placé dans le logement dans le corps de base (12).

11. Unité de détection (1) selon l'une quelconque des revendications 8 à 10, **caractérisée en ce que** le composant d'orientation (20) est introduit dans un logement du module de connecteur (5).

12. Unité de détection (1) selon l'une quelconque des revendications 8 à 11, **caractérisée en ce que** le module de connecteur (5), le support (10, 10A, 10B, 10C) et le composant d'orientation (20) sont entourés au moins partiellement d'un surmoulage en matière plastique (7).

13. Unité de détection (1) selon la revendication 12, **caractérisée en ce qu'**un module de fixation (9) est rapporté au module de connecteur (5) ou au surmoulage en matière plastique (7).

14. Procédé de montage destiné à une unité de détection (1) qui comprend un support (10, 10A, 10B, 10C) pourvu d'au moins deux barres conductrices en une pièce (14A, 14B), un transducteur (3) et un module de connecteur (5), une interface électrique interne (16.1) avec le transducteur (3) étant réalisée aux premières extrémités des au moins deux barres conductrices (14A, 14B), et une interface électrique externe (16.2, 16.2A, 16.2B, 16.2C) pour le module de connecteur (5) étant réalisée aux deuxièmes extrémités des au moins deux barres conductrices (14A, 14B),
**caractérisé en ce qu'**un composant d'orientation (20) qui entoure les au moins deux barres conductrices (14A, 14B) et est disposé entre l'interface électrique interne (16.1) et l'interface électrique externe (16.2, 16.2A, 16.2B, 16.2C) est orienté, et de ce fait définit une direction de sortie des deuxièmes extrémités des au moins deux barres conductrices (14A, 14B) et de l'interface électrique externe (16.2, 16.2A, 16.2B, 16.2C) et est adaptée au module de connecteur (5).

15. Procédé de montage selon la revendication 14, **caractérisé en ce que** le composant d'orientation (20) et les deuxièmes extrémités des au moins deux barres conductrices (14A, 14B) sont introduites dans le module de connecteur (5).

16. Procédé de montage selon la revendication 15, **caractérisé en ce que** les deuxièmes extrémités des au moins deux barres conductrices (14A, 14B) réalisent des broches de contact (14.1A, 14.1B) dans un espace de réception du module de connecteur (5) qui peuvent être mises en contact électrique avec des contacts complémentaires d'un module enfichable pouvant être introduit dans l'espace de réception.

17. Procédé de montage selon l'une quelconque des revendications 14 à 16, **caractérisé en ce que** le module de connecteur (5), le support (10, 10A, 10B, 10C) et le composant d'orientation (20) sont surmoulés au moins partiellement d'une matière plastique.

18. Procédé de montage selon la revendication 17, **caractérisé en ce qu'**un module de fixation (9) est rapporté au module de connecteur (5) ou au surmoulage en matière plastique (7).
